# EUROPÄISCHE PATENTSCHRIFT

(11) **EP 2 761 610 B1**
(45) Veröffentlichungstag und Bekanntmachung des Hinweises auf die Patenterteilung: **21.03.2018**
(21) Anmeldenummer: 12773282.4
(22) Anmeldetag: 28.09.2012
(51) Int. Cl.: H04L 12/707, H04W 12/10, H04W 4/12, H04L 29/08, G08G 1/01, G08G 1/16

(54) **VERFAHREN UND SYSTEM ZUR VERTEILTEN ÜBERTRAGUNG EINES KOMMUNIKATIONSFLUSSES SOWIE VERWENDUNG DES SYSTEMS**
METHOD AND SYSTEM FOR THE DISTRIBUTED TRANSMISSION OF A COMMUNICATION FLOW AND USE OF THE SYSTEM
PROCÉDÉ ET SYSTÈME DE TRANSMISSION RÉPARTIE D'UN FLUX DE COMMUNICATION AINSI QU'UTILISATION DU SYSTÈME

(30) Priorität: 29.09.2011 DE 102011083773; 14.09.2012 DE 102012216392
(43) Veröffentlichungstag der Anmeldung: 06.08.2014
(73) Patentinhaber: Continental Teves AG & Co. oHG, 60488 Frankfurt (DE)
(72) Erfinder: STÄHLIN, Ulrich, 65760 Eschborn (DE); SCHERPING, Richard, 65835 Liederbach am Taunus (DE)
(74) Vertreter: Wagner, Philipp
(86) Internationale Anmeldenummer: PCT/EP2012/069258
(87) Internationale Veröffentlichungsnummer: WO 2013/045657

(56) Entgegenhaltungen:
- EP-A1- 1 995 933
- WO-A1-2010/139806
- DE-A1-102007 030 430
- US-A1- 2004 013 192
- US-A1- 2009 271 112
- US-A1- 2010 149 968
- FORD ROKE MANOR RESEARCH C RAICIU M HANDLEY UNIVERSITY COLLEGE LONDON S BARRE UNIVERSITE CATHOLIQUE DE LOUVAIN J IYENGAR FRANKLIN: "Architectural Guidelines for Multipath TCP Development; rfc6182.txt", ARCHITECTURAL GUIDELINES FOR MULTIPATH TCP DEVELOPMENT; RFC6182.TXT, INTERNET ENGINEERING TASK FORCE, IETF; STANDARD, INTERNET SOCIETY (ISOC) 4, RUE DES FALAISES CH- 1205 GENEVA, SWITZERLAND, 22 March 2011 (2011-03-22), pages 1-28, XP015075927, [retrieved on 2011-03-22]

## Beschreibung

Die Erfindung betrifft ein Verfahren gemäß Oberbegriff von Anspruch 1, ein System gemäß Oberbegriff von Anspruch 12 sowie dessen Verwendung.

Die zunehmend schnell voranschreitende Entwicklung im Bereich der sogenannten Fahrzeug-zu-X-Kommunikationssysteme und der zugehörigen Technologien bietet eine Vielzahl neuer Möglichkeiten, um Risiken und Gefährdungssituationen im Straßenverkehr zu verringern oder sogar vollständig zu vermeiden. Darüber hinaus ist es bekannt, Fahrzeug-zu-X-Kommunikationssysteme zur Erhöhung des Fahrkomforts zu nutzen, beispielsweise im Rahmen eines Ampelphasen-Assistenten, oder auch für kommerzielle Anwendungen und zu Unterhaltungszwecken für die Mitfahrer. Ein mit dieser Entwicklung einhergehendes Problem stellt jedoch das Gewährleisten der notwendigen Zuverlässigkeit und insbesondere Datensicherheit der übermittelten Fahrzeug-zu-X-Informationen dar, da derartige Informationen als Grundlage für autonome Eingriffe in die Fahrzeugsteuerung genutzt werden können und Zugriff auf wesentliche Fahrzeugfunktionen erhalten. Eine falsche oder schlimmstenfalls sogar böswillig gefälschte Fahrzeug-zu-X-Information kann daher schwerwiegende Folgen haben und muss zuverlässig als nicht vertrauenswürdig erkannt werden.

In diesem Zusammenhang offenbart die DE 10 2011 077 998 A1 ein Verfahren zur Informationsvalidierung einer Fahrzeug-zu-X-Botschaft mittels Umfeldsensorik. Der Informationsinhalt einer Fahrzeug-zu-X-Information kann dabei selbst dann zuverlässig validiert werden, wenn die Umfeldsensoren den von der Fahrzeug-zu-X-Information beschriebenen Informationsinhalt nur kurzfristig bzw. mit ständigen Unterbrechungen erfassen. Somit können Fahrzeug-zu-X-Informationen auch in Situationen mit nur eingeschränkten Umfelderfassungsmöglichkeiten validiert bzw. als nicht ausreichend vertrauenswürdig verworfen werden. Sofern die Fahrzeug-zu-X-Informationen nach dem in der DE 10 2011 077 998 A1 vorgeschlagenen Verfahren validiert werden, weisen sie einen ausreichend hohen Zuverlässigkeitsgrad für einen Eingriff in die Fahrzeugsteuerung aus.

Die DE 10 2007 030 430 A1 beschreibt ein Verfahren zur Übertragung von fahrzeugrelevanten Informationen in und aus einem Fahrzeug. Mittels einer sog. Transmission Control Unit werden von unterschiedlichen Kommunikationsmitteln, wie beispielsweise Mobilfunk-Mitteln oder WLAN-Mitteln, empfangene Informationen ausgewertet und anschließend an im Fahrzeug mitgeführte mobile Endgeräte übertragen. Die Transmission Control Unit kann dabei ein Security-Modul umfassen, welches eine Kommunikation und einen Datenaustausch mit außerhalb des Fahrzeugs befindlichen Sendern in sicherer Form erlaubt. Um diese sichere Form des Datenaustauschs zu gewährleisten, werden sowohl die zu übertragenden als auch die empfangenen Informationen gespeichert und überwacht. Gleichzeit werden Angriffe von außen auf die Informationen, wie z.B. ein Abhörversuch, abgewehrt. Zusätzlich wird die Möglichkeit beschrieben, die Informationen verschlüsselt zu übertragen.

Aus der DE 10 2011 079 052 A1 sind ein Verfahren und ein System zu Validierung einer Fahrzeug-zu-X-Botschaft bekannt. Dabei wird eine drahtlos gesendete Fahrzeug-zu-X-Botschaft von einer mindestens zwei Antennenglieder aufweisenden Antennenanordnung empfangen, wobei die elektromagnetische Feldstärke der Fahrzeug-zu-X-Botschaft wegen unterschiedlicher, richtungsabhängiger Empfangscharakteristiken der Antennenglieder von den Antennengliedern mit unterschiedlichen Leistungsdichten aufgenommen wird. Die gesendete Fahrzeug-zu-X-Botschaft umfasst außerdem eine auf GPS-Daten basierende absolute Position des Senders, aus welcher der Empfänger der Fahrzeug-zu-X-Botschaft über seine Eigenposition eine erste relative Position des Senders zum Empfänger berechnet. Weiterhin bestimmt der Empfänger aus dem Verhältnis der aufgenommenen Leistungsdichten eine zweite relative Position des Senders zum Empfänger. Mittels eines Vergleichs der ersten relativen Position mit der zweiten relativen Position kann nun die empfangene Fahrzeug-zu-X-Botschaft validiert werden, sofern beide Positionen übereinstimmen, oder verworfen werden, wenn die Positionen voneinander abweichen.

Aus der US 2004/0013192 A1 geht ein durch ein Fahrzeug umfasstes Liveübertragungssystem mit einer Mehrzahl an digitalen Übertragungsmodems zur simultanen, kabellosen Übertragung von Datenpaketen zur Erhöhung der Übertragungsbandbreite sowie eine Empfangseinheit zum Zusammenfügen der empfangenen Datenpakete hervor.

Die aus dem Stand der Technik im Zusammenhang mit Fahrzeug-zu-X-Kommunikation bekannten Datensicherheitsvorkehrungen bzw. Datensicherheitsverfahren sind jedoch aus verschiedenen Gründen nachteilbehaftet. So müssen Fahrzeug-zu-X-Botschaften entweder wegen der hohen Datensicherheitsanforderungen aufwendig signiert bzw. verschlüsselt werden, wodurch vergleichsweise leistungsfähige Hardware zur Kodierung bzw. Dekodierung erforderlich wird. Diese Hardware wiederum ist mit entsprechend hohem Kostenaufwand verbunden, was derartige Verfahren unattraktiv macht. Sofern auf eine Überprüfung des Informationsinhalts der empfangenen Fahrzeug-zu-X-Botschaften mittels Umfeldsensoren zurückgegriffen wird, ist eine ausreichende Anzahl verschiedengattiger Umfeldsensoren am Fahrzeug notwendig, um eine möglichst große Zahl unterschiedlicher Informationen erfassen und mit dem Informationsinhalt der empfangenen Fahrzeug-zu-X-Botschaften vergleichen zu können. Zudem ist es aufgrund der unterschiedlichen Wirkprinzipien der Kommunikationsmittel und der Umfeldsensoren, der Ausrichtung der Umfeldsensoren oder schlicht wegen des Fehlens von Umfeldsensoren oftmals nicht möglich, eine Fahrzeug-zu-X-Botschaft auf diesem Weg zu überprüfen. Die Verwendung einer richtungsselektiven Antenne wiederum erlaubt oftmals keine eindeutigen Rückschlüsse auf die Position des Senders, da das elektromagnetische Feld der gesendeten Fahrzeug-zu-X-Botschaft auf der Strahlstrecke bis zur Antenne des Empfängers einer Vielzahl von Einflüssen unterworfen ist. Dies mindert die Zuverlässigkeit und Verfügbarkeit eines derartigen Verfahrens.

Der Erfindung liegt daher die Aufgabe zugrunde, ein Verfahren vorzuschlagen, welches die aus dem Stand der Technik bekannten Nachteile vermeidet.

Diese Aufgabe wird erfindungsgemäß durch das Verfahren zur verteilten Übertragung eines Kommunikationsflusses gemäß Anspruch 1 gelöst.

Gemäß dem erfindungsgemäßen Verfahren zur verteilten Übertragung eines Kommunikationsflusses, bei welchem der Kommunikationsfluss von einer ersten an eine zweite Kommunikationseinheit zumindest monodirektional erfolgt und wobei die erste und die zweite Kommunikationseinheit zur Übertragung des Kommunikationsflusses mittels mindestens zweier unterschiedlicher Kommunikationswege befähigt sind, umfasst der Kommunikationsfluss mindestens eine Fahrzeug-zu-X-Botschaft. Das Verfahren zeichnet sich dadurch aus, dass der Kommunikationsfluss von der ersten Kommunikationseinheit vor einem Senden in mindestens zwei Kommunikationsteilflüsse geteilt wird, wobei die mindestens zwei Kommunikationsteilflüsse von der ersten an die zweite Kommunikationseinheit auf die mindestens zwei unterschiedlichen Kommunikationswege verteilt übertragen werden und wobei die mindestens zwei Kommunikationsteilflüsse von der zweiten Kommunikationseinheit nach einem Empfangen wieder zusammengefügt werden.

Das erfindungsgemäße Verfahren führt somit zu dem Vorteil, dass der Kommunikationsfluss und die vom Kommunikationsfluss umfassten Fahrzeug-zu-X-Botschaften vergleichsweise einfach gegen versehentliche und insbesondere gegen böswillige Informationseinschleusungen bzw. Informationsveränderungen geschützt werden können, da die zweite Kommunikationseinheit beim Zusammenfügen der mindestens zwei Kommunikationsteilflüsse feststellt, ob die mindestens zwei Kommunikationsteilflüsse dem von der ersten Kommunikationseinheit zuvor geteilten Kommunikationsfluss entsprechen. Wenn sich die mindestens zwei Kommunikationsteilflüsse nicht zu einem widerspruchsfreien bzw. konsistenten gemeinsamen Kommunikationsfluss zusammenfügen lassen, so ist dies ein Hinweis, dass einer der Kommunikationsteilflüsse versehentlich oder böswillig verändert wurde. Diese Dateninkonsistenz äußert sich beispielsweise darin, dass der zusammengefügte Kommunikationsfluss eine nicht mehr auswertbare bzw. nicht lesbare Information beschreibt. Dies erzeugt eine entsprechende, zumindest interne Fehlermeldung, welche auch extern ausgegeben werden kann.

Somit ist also ein versehentliches oder böswilliges verfälschen des Informationsinhalts der vom Kommunikationsfluss umfassten Fahrzeug-zu-X-Botschaften insofern erschwert, als dass die mindestens zwei Kommunikationsteilflüsse in gleichem Maße und synchron verändert werden müssen, um diese Veränderung beim Zusammenfügen durch die zweite Kommunikationseinheit zu verschleiern. Da die mindestens zwei Kommunikationsteilflüsse zudem über mindestens zwei unterschiedliche Kommunikationswege verteilt übertragen werden, ist es jedoch weitestgehend unmöglich, die mindestens zwei Kommunikationsteilflüsse in gleichem Maße und synchron zu verändern.

Bevorzugt ist es vorgesehen, dass die erste und die zweite Kommunikationseinheit jeweils zur bidirektionalen Kommunikation befähigt sind, wobei die bidirektionale Kommunikation zwei entgegengerichtete monodirektionale Kommunikationsflüsse umfasst, wobei für die bidirektionale Kommunikation von der ersten und zweiten Kommunikationseinheit zur Übertragung des monodirektionalen Kommunikationsflusses jeweils unterschiedliche Kommunikationswege gewählt werden und wobei insbesondere für die bidirektionale Kommunikation ein monodirektionaler Kommunikationsfluss nicht geteilt wird. Somit ergibt sich der Vorteil, dass durch das erfindungsgemäße Verfahren auch eine sichere bidirektionale Kommunikation ermöglicht wird. Die Ausführung und Umsetzung des erfindungsgemäßen Verfahrens wird zudem vereinfacht, indem bei der bidirektionalen Kommunikation ein monodirektionaler Kommunikationsfluss nicht geteilt wird, da somit die erste Kommunikationseinheit auf einem ersten Kommunikationsweg sendet und auf einem zweiten Kommunikationsweg empfängt, während die zweite Kommunikatiosneinheit auf dem zweiten Kommunikationsweg sendet und auf dem ersten Kommunikationsweg empfängt. Sofern die erste und die zweite Kommunikationseinheit zur Kommunikation mittels mehr als zwei unerschiedlichen Kommunikationswegen befähigt sind, können die zum Senden bzw. Empfangen genutzten Kommunikationswege zudem regelmäßig geändert werden, was die Datensicherheit der Kommunikation weiter erhöht.

Weiterhin ist es bevorzugt, dass die Fahrzeug-zu-X-Botschaft aus einem Nutzdatenteil und einem Sicherheitsdatenteil besteht, wobei der Sicherheitsdatenteil eine Prüfsumme und/oder einen Zeitstempel und/oder ein Datensicherheitszertifikat, insbesondere ein auf zentraler Infrastruktur basierendes Datensicherheitszertifikat, umfasst. Der Nutzdatenteil umfasst dabei die eigentliche, zu übertragende Information, beispielsweise eine sog. "CAM" (cooperative awareness message), welche durch den Sicherheitsdatenteil datentechnisch geschützt wird. Ein Beispiel für ein erfindungsgemäß verwendbares Datensicherheitszertifikat ist etwa ein Datensicherheitszertifikat, das mittels zentraler Infrastruktur erstellt und verteilt wird. Derartige zentrale Infrastruktur ist im Allgemeinen auch als sog. "Public-Key-Infrastruktur" bekannt.

Insbesondere ist es bevorzugt, dass der Nutzdatenteil und der Sicherheitsdatenteil auf unterschiedlichen Kommunikationswegen übertragen werden, wobei geprüft wird, ob der Sicherheitsdatenteil dem Nutzdatenanteil zuordbar ist und wobei die Fahrzeug-zu-X-Botschaft als nicht zuverlässig eingestuft wird, wenn der Sicherheitsdatenteil dem Nutzdatenteil nicht zuordbar ist. Durch Prüfen der Zuordbarkeit des Nutzdatenteils zum Sicherheitsdatenteil bzw. umgekehrt lässt sich auf einfache Weise eine Dateninkonsistenz feststellen, wobei dennoch eine Auswertbarkeit bzw. Lesbarkeit des Nutzdatenteils gewährleistet bleibt. Die Einstufung der Fahrzeug-zu-X-Botschaft als nicht zuverlässig ermöglicht zudem eine entsprechende Nutzung der Fahrzeug-zu-X-Botschaft für unkritische Anwendungen, wie z.B. die Ausgabe eines Hinweises an den Fahrer, wobei der Fahrer die dem Hinweis zugrunde liegende Situation mittels seiner Sinneswahrnehmung selbst prüfen kann.

Außerdem ist es bevorzugt, dass über die jeweils mindestens zwei unterschiedlichen Kommunikationswege ein identischer Kommunikationsteilfluss, insbesondere ein identischer Nutzdatenteil der Fahrzeug-zu-X-Botschaft, redundant übertragen wird. Dadurch wird die Datensicherheit bei der Kommunikation weiter erhöht, da ein Kommunikationsteilfluss bei der empfangenden Kommunikationseinheit redundant zur Verfügung steht.

Insbesondere ist es bevorzugt, dass ein Abgleich des redundant übertragenen Kommunikationsteilflusses, insbesondere des redundant übertragenen Nutzdatenteils der Fahrzeug-zu-X-Botschaft, erfolgt, wobei bei einer Abweichung der redundant übertragene Kommunikationsteilfluss, insbesondere die redundant übertragene Fahrzeug-zu-X-Botschaft, als nicht zuverlässig eingestuft wird. Somit wird es ermöglicht, durch ein einfaches Abgleichen der redundant empfangenen Kommunikationsteilflüsse bzw. der Nutzdatenteile der Fahrzeug-zu-X-Botschaften eine Veränderung in der Kommunikation sofort zu erkennen. Die ggf. folgende Einstufung der redundant empfangenen Kommunikationsflüsse, insbesondere der Nutzdatenteile der Fahrzeug-zu-X-Botschaften, als nicht zuverlässig erlaubt unter Umständen dennoch eine entsprechende Verwendung.

Besonders bevorzugt ist es vorgesehen, dass ein Abgleich eines zeitlichen Verhaltens der über die mindestens zwei unterschiedlichen Kommunikationswege verteilt übertragenen Fahrzeug-zu-X-Botschaft erfolgt, wobei bei einer Abweichung die Fahrzeug-zu-X-Botschaft als nicht zuverlässig eingestuft wird. Ergeben sich Abweichungen von einem typischen, einem bekannten, einem erwarteten bzw. einem vorgegebenen zeitlichen Verhalten, so kann dies durch eine Veränderung des Informationsinhalts des Kommunikationsflusses verursacht sein. Eine als nicht zuverlässig klassifizierte Fahrzeug-zu-X-Botschaft kann dann ggf. noch für unkritische Verwendungen genutzt werden. Als zu betrachtende Größen für den Abgleich des zeitlichen Verhaltens können z.B. die Latenzen, die Zeitstempel bzw. die bekannten Übertragungseigenschaften der genutzten unterschiedlichen Kommunikationswege herangezogen werden.

In einer vorteilhaften Ausführungsform der Erfindung ist es vorgesehen, dass aus Empfangseigenschaften einer elektromagnetischen Welle der Fahrzeug-zu-X-Botschaft an einer Empfangsvorrichtung einer die Fahrzeug-zu-X-Botschaft empfangenden Kommunikationseinheit Positionsinformationen einer die Fahrzeug-zu-X-Botschaft sendenden Kommunikationseinheit bestimmt werden und mit von der Fahrzeug-zu-X-Botschaft umfassten Positionsinformationen der die Fahrzeug-zu-X-Botschaft sendenden Kommunikationseinheit abgeglichen werden, wobei bei einer Abweichung die Fahrzeug-zu-X-Botschaft als nicht zuverlässig eingestuft wird. Somit kann das erfindungsgemäße Verfahren durch Hinzuziehen einer zusätzlichen Prüfebene, nämlich der elektromagnetischen Empfangseigenschaften der vom Kommunikationsfluss umfassten Fahrzeug-zu-X-Botschaft, noch sicherer und zuverlässiger gestaltet werden. Der besondere Vorteil dieser Ausführungsform ist es, dass die aus den Empfangseigenschaften der elektromagnetischen Welle der Fahrzeug-zu-X-Botschaft an der Empfangsvorrichtung der die Fahrzeug-zu-X-Botschaft empfangenden Kommunikationseinheit bestimmten Positionsinformationen durch einen Dritten nicht verändert werden können. Somit steht eine fälschungssichere Größe für den Abgleich zur Verfügung.

In einer weiteren bevorzugten Ausführungsform ist es vorgesehen, dass eine kommunikationswegabhängige Zuverlässigkeitsbewertung erfolgt, insbesondere wenn die Fahrzeug-zu-X-Botschaft zuvor als nicht zuverlässig eingestuft wurde. Daraus ergibt sich der Vorteil, dass eine abgestufte Zuverlässigkeitsbewertung ermöglicht wird, welche den unterschiedlichen Kommunikationswegen und ihren technisch bedingt unterschiedlichen Manipulationsanfälligkeiten Rechnung trägt. Als Basis dieser Bewertung kann z.B. das auf dem jeweiligen Kommunikationsweg genutzte Datensicherheitsverfahren verwendet werden. Sofern die Fahrzeug-zu-X-Botschaft als nicht zuverlässig eingestuft wurde, ermöglicht die kommunikationswegabhängige Zuverlässigkeitsbewertung eine Beurteilung, auf welchem Kommunikationsweg ein redundant übertragener Anteil der Fahrzeug-zu-X-Botschaft mutmaßlich verändert wurde und welcher redundant übertragene Anteil folglich mutmaßlich unverändert ist.

Des Weiteren ist es bevorzugt, dass als nicht zuverlässig eingestufte Fahrzeug-zu-X-Botschaften unverarbeitet verworfen werden. Somit wird es vermieden, eine falsche oder sogar böswillig gefälschte Fahrzeug-zu-Botschaft zu verarbeiten und dadurch eine Gefahrensituation zu erzeugen oder der Erzeugung einer Gefahrensituation Vorschub zu leisten.

Zweckmäßigerweise ist es vorgesehen, dass eine Verteilung der mindestens zwei Kommunikationsteilflüsse auf die mindestens zwei unterschiedlichen Kommunikationswege nach einem vorgegebenen Schema erfolgt. Das vorgegebene Schema ist dabei vorzugsweise nur der ersten und zweiten Kommunikationseinheit bekannt. Besonders bevorzugt überträgt die erste Kommunikationseinheit zu Beginn der Kommunikation eine entsprechende Information über das Schema zur Änderung der Kommunikationswege an die zweite Kommunikationseinhet. Somit wird es zusätzlich erschwert, einen Kommunikationsteilfluss zu verändern bzw. zu verfälschen, da die empfangende Kommunikationseinheit den Empfang des Kommunikationsteilflusses über einen für einen Dritten nicht vorhersehbaren Kommunikationsweg erwartet.

Außerdem ist es vorteilhaft, dass die jeweils mindestens zwei unterschiedlichen Kommunikationswege mindestens zwei unterschiedliche Kommunikationsmittel und/oder unterschiedliche Kommunikationskanäle ein und desselben Kommunikationsmittels sind. Durch die Verwendung unterschiedlicher Kommunikationsmittel als unterschiedliche Kommunikationswege wird in der Regel ein deutlich unterschiedliches Verhalten der unterschiedlichen Kommunikationswege gewährleistet, was für einen Dritten wiederum mit vergleichsweise großen Schwierigkeiten einer synchronen Veränderung des übertragenen Kommunikationsflusses verbunden ist. Somit ist diese Ausführungsvariante besonders sicher. Die Verwendung unterschiedlicher Kommunikationskanäle ein und desselben Fahrzeug-zu-X-Kommunikationsmittels als unterschiedliche Kommunikationswege hingegen ermöglicht die Anwendung des erfindungsgemäßen Verfahrens auch mit nur einfach ausgestatteten Kommunikationseinheiten, die nur über ein einziges Kommunikationsmittel verfügen.

Die vorliegende Erfindung betrifft des Weiteren ein System zur verteilten Übertragung eines Kommunikationsflusses, welches mindestens eine erste und eine zweite Kommunikationseinheit umfasst, die jeweils monodirektional oder bidirektional miteinander kommunizieren. Die erste und die zweite Kommunikationseinheit umfassen ihrerseits jeweils Kommunikationsmittel und sind durch diese zur Übertragung des Kommunikationsflusses mittels mindestens zweier unterschiedlicher Kommunikationswege befähigt. Weiterhin umfassen die erste und die zweite Kommunikationseinheit insbesondere Abgleichsmittel zum Abgleichen redundant empfangener Kommunikationsteilflüsse und Bewertungsmittel zum Bewerten einer Zuverlässigkeit einer von einem empfangenen Kommunikationsteilfluss umfassten Fahrzeug-zu-X-Botschaft. Das erfindungsgemäße System ist dadurch gekennzeichnet dass die erste und/oder die zweite Kommunikationseinheit Kommunikationsflussteilungsmittel zum Teilen eines Kommunikationsflusses in mindestens zwei Kommunikationsteilflüsse und/oder Kommunikationsflusszusammenfügungsmittel zum Zusammenfügen der mindestens zwei Kommunikationsteilflüsse zu einem gemeinsamen Kommunikationsfluss umfassen und dass das System das erfindungsgemäße Verfahren ausführt. Da das erfindungsgemäße System somit alle zur Ausführung des erfindungsgemäßen Verfahrens notwendigen Mittel umfasst und das erfindungsgemäße Verfahren ausführt, ergeben sich hieraus die bereits beschriebenen Vorteile.

Als Kommunikationsflussteilungsmittel bzw. Kommunikationsflusszusammenfügungsmittel können z.B. entsprechend ausgelegte elektronische Schaltungen oder Mikroprozessoren verwendet werden, die geeignet sind, einen binären Datenstrom nach einem vorgegebenen Schema aufzuteilen bzw. zusammenzufügen.

Ebenso sind die Abgleichsmittel und die Bewertungsmittel bevorzugt als elektronische Schaltung oder Mikroprozessor ausgelegt. Besonders bevorzugt greifen die Abgleichsmittel, die Bewertungsmittel, die Kommunikationsflussteilungsmittel und die Kommunikationsflusszusammenfügungsmittel auf einen gemeinsamen Mikroprozessor zurück, der eine für alle diese Verwendungen ausreichend große Rechenkapazität zur Verfügung stellt.

Bevorzugt ist es vorgesehen, dass ein Kommunikationsmittel auf Basis mindestens einer der folgenden Verbindungsarten kommuniziert:
- WLAN-Verbindung, insbesondere nach IEEE 802.11p,
- ISM-Verbindung (Industrial, Scientific, Medical Band), insbesondere über eine funkverbindungsfähige Schließvorrichtung,
- Bluetooth-Verbindung,
- ZigBee-Verbindung,
- UWB-Verbindung (Ultra Wide Band),
- WiMax (Worldwide Interoperability for Microwave Access),
- Mobilfunkverbindung, insbesondere GSM-, GPRS-, EDGE-, UMTS- und/oder LTE-Verbindungen und
- Infrarotverbindung,
wobei die mobilfunkbasierten Kommunikationsmittel besonders bevorzugt einem automatischen Notruf-Modul zugeordnet sind. Die aufgeführten Verbindungsarten bieten unterschiedliche Vor- und Nachteile, je nach Art, Wellenlänge und verwendetem Datenprotokoll. WLAN-Verbindungen ermöglichen z.B. eine hohe Datenübertragungsrate und einen schnellen Verbindungsaufbau. ISM-Verbindungen bieten hingegen nur eine geringere Datenübertragungsrate, sind aber hervorragend zur Datenübertragung um Sichthindernisse herum geeignet. Infrarotverbindungen wiederum bieten ebenfalls eine geringe Datenübertragungsrate. Mobilfunkverbindungen schließlich werden durch Sichthindernisse nicht beeinträchtigt und bieten eine gute Datenübertragungsrate. Dafür ist der Verbindungsaufbau von Mobilfunkverbindungen jedoch vergleichsweise langsam.

Ein automatisches Notruf-Modul ist auch bekannt als sogenanntes eCall-Modul.

Die Erfindung betrifft außerdem eine Verwendung des Systems zur verteilten Übertragung eines Kommunikationsflusses zur Fahrzeug-zu-X-Kommunikation in Kraftfahrzeugen.

Weitere bevorzugte Ausführungsformen ergeben sich aus den Unteransprüchen und der nachfolgenden Beschreibung eines Ausführungsbeispiels an Hand von Figuren.

Es zeigt
- Fig. 1: eine mögliche Ausführungsform eines erfindungsgemäßen Verfahrens in Form eines Flussdiagramms,
- Fig. 2: einen schematischen Aufbau eines erfindungsgemäßen Systems und
- Fig. 3: eine mögliche Datenstruktur einer von einem Kommunikationsfluss umfassten Fahrzeug-zu-Botschaft.

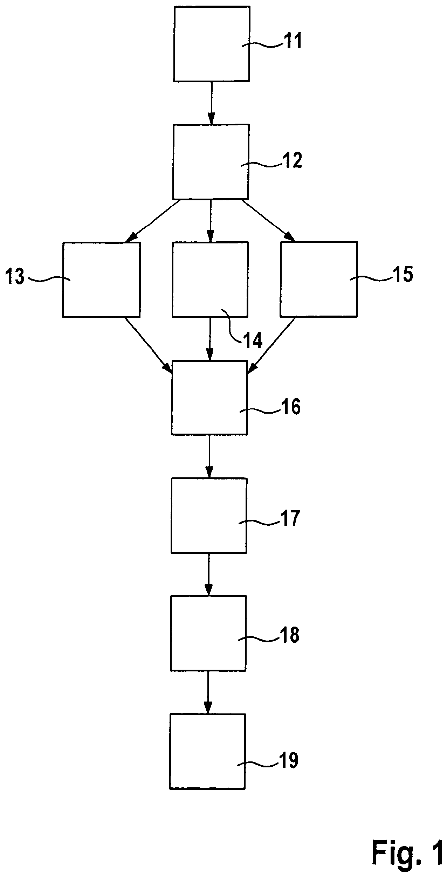

In Fig. 1 ist eine beispielhafte Darstellung eines erfindungsgemäßen Verfahrensablaufs in Form eines Flussdiagramms dargestellt. In Schritt 11 wird von einer ersten Kommunikationseinheit ein zu versendender Kommunikationsfluss erstellt, welcher eine Vielzahl von Fahrzeug-zu-X-Botschaften umfasst. Im folgenden Schritt 12 wird der Kommunikationsfluss in drei unterschiedliche Kommunikationsteilflüsse geteilt, welche jeweils unabhängig voneinander auf drei unterschiedlichen Kommunikationswege verteilt übertragen werden. Die Übertragung geschieht jeweils zeitgleich in den Verfahrensschritten 13, 14 und 15. Dabei wird in Schritt 13 ein erster Kommunikationsteilfluss mittels einer WLAN-Verbindung übertragen, in Schritt 14 ein zweiter Kommunikationsteilfluss mittels einer Mobilfunkverbindung und in Schritt 15 ein dritter Kommunikationsteilfluss mittels einer ISM-Verbindung. Die von den drei Kommunikationsteilflüssen umfassten Fahrzeug-zu-X-Botschaften sind dabei teilweise redundant in den drei Kommunikationsteilflüssen enthalten. In Verfahrensschritt 16 werden die drei Kommunikationsteilflüsse von einer zweiten Kommunikationseinheit empfangen, welche wie die erste Kommunikationseinheit zur Kommunikation mittels WLAN-Kommunikationsmitteln, Mobilfunk-Kommunikationsmitteln und ISM-Kommunikationsmitteln befähigt ist. Im folgenden Schritt 17 werden nun die redundant enthaltenen Anteile der drei Kommunikationsteilflüsse untereinander abgeglichen. Da der Abgleich ergibt, dass die drei Kommunikationsteilflüsse keine Abweichungen voneinander aufweisen, werden sie in Schritt 18 zu einem gemeinsamen Kommunikationsfluss zusammengefügt. Da hierbei keine Dateninkonsistenzen auftreten und die Sicherheitsdatenteile jeweils den Nutzdatenteilen zuordbar sind, wird davon ausgegangen, dass der Kommunikationsfluss nicht manipuliert wurde. In Schritt 19 werden die vom Kommunikationsfluss umfassten Fahrzeug-zu-X-Botschaften daher an die entsprechenden Fahrzeugsysteme weitergeführt und verarbeitet.

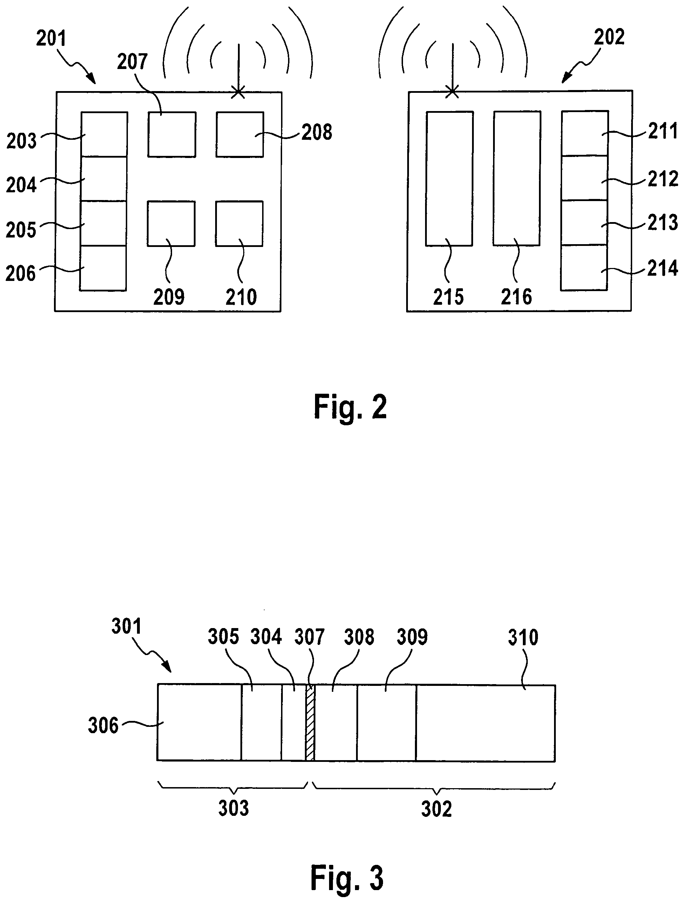

Fig. 2 zeigt einen schematischen Aufbau eines erfindungsgemäßen Systems, welches untereinander bidirektional kommunizierende Kommunikationseinheiten 201 und 202 umfasst. Kommunikationseinheit 201 wiederum umfasst ihrerseits unterschiedliche Kommunikationsmittel 203, 204, 205 und 206. Bei Kommunikationsmitteln 203 handelt es sich um WLAN-Kommunikationsmittel nach IEEE 802.11p, bei Kommunikationsmitteln 204 um UMTS-fähige Mobilfunk-Kommunikationsmittel, bei Kommunikationsmitteln 205 um ISM-Kommunikationsmittel und bei Kommunikationsmitteln 206 um WiMax-Kommunikationsmittel. Außerdem umfasst Kommunikationseinheit 201 Abgleichsmittel 207 zum Abgleichen redundant empfangener Kommunikationsteilflüsse und Bewertungsmittel 208 zum Bewerten einer Zuverlässigkeit einer von einem empfangenen Kommunikationsteilfluss umfassten Fahrzeug-zu-X-Botschaft. Mittels Kommunikationsflussteilungsmitteln 209 wird ein zu versendender Kommunikationsfluss in mindestens zwei Kommunikationsteilflüsse geteilt und mittels Kommunikationsflusszusammenfügungsmitteln 210 werden empfangene Kommunikationsteilflüsse zu einem gemeinsamen Kommunikationsfluss zusammengefügt. Abgleichsmittel 207, Bewertungsmittel 208, Kommunikationsflussteilungsmittel 209 und Kommunikationsflusszusammenfügungsmittel 210 sind jeweils als eigenständiger Mikroprozessor mit entsprechender softwareseitiger und hardwareseitiger Datenverarbeitungsstruktur ausgebildet.

Kommunikationseinheit 202 umfasst Kommunikationsmittel 211, 212, 213 und 214. Kommunikationsmittel 211 sind dabei als WLAN-Kommunikationsmittel nach IEEE 802.11p ausgebildet, Kommunikationsmittel 212 als HSDPA-fähige Mobilfunk-Kommunikationsmittel mit Abwärtskompatibilität für UMTS-Verbindungen, Kommunikationsmittel 213 als Bluetooth-Kommunikationsmittel und Kommunikationsmittel 214 als Infrarot-Kommunikationsmittel. Da Kommunikationseinheiten 201 und 202 somit nur WLAN-Kommunikationsmittel 203, 211 und Mobilfunk-Kommunikationsmittel 204, 212 als gemeinsame Kommunikationsmittel aufweisen, findet die Kommunikation zwischen Kommunikationseinheiten 201 und 202 nur über WLAN-Kommunikationsmittel 203, 211 und Mobilfunk-Kommunikationsmittel 204, 212 statt. Weiterhin umfasst Kommunikationseinheit 202 in Mikroprozessor 215 kombinierte Abgleichsmittel zum Abgleichen redundant empfangener Kommunikationsteilflüsse und Bewertungsmittel zum Bewerten einer Zuverlässigkeit einer von einem empfangenen Kommunikationsteilfluss umfassten Fahrzeug-zu-X-Botschaft. Mikroprozessor 216 stellt die ebenfalls kombinierten Kommunikationsflussteilungsmittel zum Teilen eines zu versendender Kommunikationsflusses in mindestens zwei Kommunikationsteilflüsse sowie Kommunikationsflusszusammenfügungsmittel zum Zusammenfügen empfangener Kommunikationsteilflüsse zu einem gemeinsamen Kommunikationsfluss dar. Da Mikroprozessoren 215 und 216 somit jeweils zwei unterschiedliche Aufgaben zugewiesen sind, verfügen sie im Vergleich zu Mikroprozessoren 207, 208, 209 und 210 in Kommunikationseinheit 201 über eine höhere Rechenkapazität.

In Fig. 3 ist eine mögliche Datenstruktur von von einem Kommunikationsfluss umfassten Fahrzeug-zu-X-Botschaft 301 abgebildet. Fahrzeug-zu-Botschaft 301 besteht aus Sicherheitsdatenteil 303 und Nutzdatenteil 302, welche durch charakteristische Bitfolge 307 voneinander getrennt werden. Sicherheitsdatenteil 303 umfasst Prüfsumme 304, Zeitstempel 305 und auf zentraler Infrastruktur basierendes Datensicherheistzertifikat 306. Somit umfasst Sicherheitsdatenteil 303 wesentliche Informationen, welche von einem Empfänger von Fahrzeug-zu-Botschaft 301 genutzt werden können, die Autenthizität und Zuverlässigkeit von Fahrzeug-zu-Botschaft 301 zu bewerten. Nutzdatenteil 302 umfasst seinerseits zunächst auf GPS-Koordinaten basierende Positionsinformation 308 des Senders. Weiterhin umfasst Nutzdatenteil 302 Ausrichtungs- und Geschwindigkeitsinformationen 309 des Senders sowie Stauinformation 310. Stauinformation 310 beschreibt, dass der Sender von Fahrzeug-zu-Botschaft 301 mittels Fahrzeug-zu-Kommunikationsmitteln und Kamerasensorik ein Stauende erkannt hat. In Stauinformation 310 ist weiterhin eine auf GPS-Koordinaten basierende Positionsinformation des Stauendes enthalten sowie eine Wahrscheinlichkeitsangabe, die beschreibt, mit welcher Wahrscheinlichkeit es sich bei der erkannten Situation nach Bewertung des Senders tatsächlich um ein Stauende handelt.

## Patentansprüche

1. Verfahren zur verteilten Übertragung eines Kommunikationsflusses,
- bei welchem der Kommunikationsfluss von einer ersten an eine zweite Kommunikationseinheit (201, 202) zumindest monodirektional erfolgt,
- wobei die erste und die zweite Kommunikationseinheit (201, 202) zur Übertragung des Kommunikationsflusses mittels mindestens zweier unterschiedlicher Kommunikationswege (203, 204, 205, 206, 211, 212, 213, 214) befähigt sind und
- wobei der Kommunikationsfluss mindestens eine Fahrzeug-zu-X-Botschaft (301) umfasst,
- wobei der Kommunikationsfluss von der ersten Kommunikationseinheit (201) vor einem Senden in mindestens zwei Kommunikationsteilflüsse geteilt wird,
- wobei die mindestens zwei Kommunikationsteilflüsse von der ersten an die zweite Kommunikationseinheit (201, 202) auf die mindestens zwei unterschiedlichen Kommunikationswege (203, 204, 205, 206, 211, 212, 213, 214) verteilt übertragen werden,
- wobei die mindestens zwei Kommunikationsteilflüsse von der zweiten Kommunikationseinheit (202) nach einem Empfangen wieder zusammengefügt werden,
**dadurch gekennzeichnet,**
**dass** die zweite Kommunikationseinheit beim Zusammenfügen der mindestens zwei Kommunikationsteilflüsse prüft, ob sich die mindestens zwei Kommunikationsteilflüsse zu einem zuverlässigen gemeinsamen Kommunikationsfluss zusammenfügen lassen, indem die zweite Kommunikationseinheit (202) feststellt, ob die mindestens zwei Kommunikationsteilflüsse dem von der ersten Kommunikationseinheit zuvor geteilten Kommunikationsfluss entsprechen,
- wobei die Fahrzeug-zu-X-Botschaft (301) aus einem Nutzdatenteil (302) und einem Sicherheitsdatenteil (303) besteht,
- wobei der Sicherheitsdatenteil (303) Informationen zur Bewertung der Authentizität und Zuverlässigkeit der Fahrzeug-zu-X-Botschaft durch den Empfänger umfasst und der Nutzdatenteil (302) und der Sicherheitsdatenteil (303) auf jeweils unterschiedlichen der mindestens zwei Kommunikationswege (203, 204, 205, 206, 211, 212, 213, 214) übertragen werden, wobei der gemeinsame Kommunikationsfluss als zuverlässig eingestuft wird, wenn der Sicherheitsdatenteil (303) dem Nutzdatenanteil (302) zuordbar ist und wobei die Fahrzeug-zu-X-Botschaft (301) als nicht zuverlässig eingestuft wird, wenn der Sicherheitsdatenanteil (303) dem Nutzdatenanteil (302) nicht zuordbar ist.

2. Verfahren nach Anspruch 1,
**dadurch gekennzeichnet, dass** die erste und die zweite Kommunikationseinheit (201) jeweils zur bidirektionalen Kommunikation befähigt sind, wobei die bidirektionale Kommunikation zwei entgegengerichtete monodirektionale Kommunikationsflüsse umfasst, wobei für die bidirektionale Kommunikation von der ersten und zweiten Kommunikationseinheit (201, 202) zur Übertragung des monodirektionalen Kommunikationsflusses jeweils unterschiedliche Kommunikationswege (203, 204, 205, 206, 211, 212, 213, 214) gewählt werden.

3. Verfahren nach mindestens einem der Ansprüche 1 und 2,
**dadurch gekennzeichnet, dass** der Sicherheitsdatenteil (303) eine Prüfsumme (304) und/oder einen Zeitstempel (305) und/oder ein Datensicherheitszertifikat (306), insbesondere ein auf zentraler Infrastruktur basierendes Datensicherheitszertifikat (306), umfasst.

4. Verfahren nach mindestens einem der Ansprüche 1 bis 3,
**dadurch gekennzeichnet, dass** über die jeweils mindestens zwei unterschiedlichen Kommunikationswege (203, 204, 205, 206, 211, 212, 213, 214) ein identischer Kommunikationsteilfluss redundant übertragen wird.

5. Verfahren nach Anspruch 4,
**dadurch gekennzeichnet, dass** weiterhin ein Abgleich des redundant übertragenen Kommunikationsteilflusses erfolgt, wobei bei einer Abweichung der redundant übertragene Kommunikationsteilfluss, insbesondere die redundant übertragene Fahrzeug-zu-X-Botschaft (301), als nicht zuverlässig eingestuft wird.

6. Verfahren nach mindestens einem der Ansprüche 3 bis 5,
**dadurch gekennzeichnet, dass** weiterhin ein Abgleich eines zeitlichen Verhaltens der über die mindestens zwei unterschiedlichen Kommunikationswege (203, 204, 205, 206, 211, 212, 213, 214) verteilt übertragenen Fahrzeug-zu-X-Botschaft (301) erfolgt, wobei bei einer Abweichung des zeitlichen Verhaltens die Fahrzeug-zu-X-Botschaft (301) als nicht zuverlässig eingestuft wird.

7. Verfahren nach mindestens einem der Ansprüche 1 bis 6,
**dadurch gekennzeichnet, dass** weiterhin aus Empfangseigenschaften einer elektromagnetischen Welle der Fahrzeug-zu-X-Botschaft (301) an einer Empfangsvorrichtung einer die Fahrzeug-zu-X-Botschaft (301) empfangenden Kommunikationseinheit (201, 202) Positionsinformationen einer die Fahrzeug-zu-X-Botschaft (301) sendenden Kommunikationseinheit (201, 202) bestimmt werden und mit von der Fahrzeug-zu-X-Botschaft (301) umfassten Positionsinformationen (308) der die Fahrzeug-zu-X-Botschaft (301) sendenden Kommunikationseinheit (201, 202) abgeglichen werden, wobei bei einer Abweichung der Positionsinformationen die Fahrzeug-zu-X-Botschaft (301) als nicht zuverlässig eingestuft wird.

8. Verfahren nach mindestens einem der Ansprüche 1 bis 7,
**dadurch gekennzeichnet, dass**, wenn die Fahrzeug-zu-X-Botschaft (301) zuvor als nicht zuverlässig eingestuft wurde, eine kommunikationswegabhängige Zuverlässigkeitsbewertung zur Beurteilung, auf welchem Kommunikationsweg ein redundant übertragener Anteil der Fahrzeug-zu-X-Botschaft mutmaßlich verändert wurde und welcher redundant übertragene Anteil folglich mutmaßlich unverändert ist, erfolgt.

9. Verfahren nach mindesten einem der Ansprüche 1 bis 8,
**dadurch gekennzeichnet, dass** als nicht zuverlässig eingestufte Fahrzeug-zu-X-Botschaften (301) unverarbeitet verworfen werden.

10. Verfahren nach mindestens einem der Ansprüche 1 bis 9,
**dadurch gekennzeichnet, dass** eine Verteilung der mindestens zwei Kommunikationsteilflüsse auf die mindestens zwei unterschiedlichen Kommunikationswege (203, 204, 205, 206, 211, 212, 213, 214) nach einem vorgegebenen Schema erfolgt.

11. Verfahren nach mindestens einem der Ansprüche 1 bis 10,
**dadurch gekennzeichnet, dass** die jeweils mindestens zwei unterschiedlichen Kommunikationswege (203, 204, 205, 206, 211, 212, 213, 214) mindestens zwei unterschiedliche Kommunikationsmittel (203, 204, 205, 206, 211, 212, 213, 214) und/oder unterschiedliche Kommunikationskanäle ein und desselben Kommunikationsmittels (203, 204, 205, 206, 211, 212, 213, 214) sind.

12. System zur verteilten Übertragung eines Kommunikationsflusses,
umfassend mindestens eine erste und eine zweite Kommunikationseinheit (201, 202), welche monodirektional oder bidirektional miteinander kommunizieren,
wobei die erste und die zweite Kommunikationseinheit (201, 202) jeweils Kommunikationsmittel (203, 204, 205, 206, 211, 212, 213, 214) umfassen und mittels diesen zur Übertragung des Kommunikationsflusses mittels mindestens zweier unterschiedlicher Kommunikationswege (203, 204, 205, 206, 211, 212, 213, 214) befähigt sind,
wobei die erste Kommunikationseinheit (201) Kommunikationsflussteilungsmittel (209) zum Teilen eines Kommunikationsflusses in mindestens zwei Kommunikationsteilflüsse umfasst; und wobei die zweite Kommunikationseinheit (202) Kommunikationsflusszusammenfügungsmittel (216) zum Zusammenfügen der mindestens zwei Kommunikationsteilflüsse zu einem gemeinsamen Kommunikationsfluss umfasst;
**dadurch gekennzeichnet, dass** die zweite Kommunikationseinheit (202) Bewertungsmittel (215) zum Bewerten einer Zuverlässigkeit einer von einem empfangenen Kommunikationsteilfluss umfassten Fahrzeug-zu-X-Botschaft (301) und weiterhin Abgleichsmittel (215) zum Abgleichen redundant empfangener Kommunikationsteilflüsse umfasst,
und wobei das System ein Verfahren nach mindestens einem der Ansprüche 1 bis 11 ausführt.

13. System nach Anspruch 12,
**dadurch gekennzeichnet, dass** ein Kommunikationsmittel (203, 204, 205, 206, 211, 212, 213, 214) auf Basis mindestens einer der folgenden Verbindungsarten kommuniziert:
- WLAN-Verbindung, insbesondere nach IEEE 802.11p,
- ISM-Verbindung (Industrial, Scientific, Medical Band), insbesondere über eine funkverbindungsfähige Schließvorrichtung,
- Bluetooth-Verbindung,
- ZigBee-Verbindung,
- UWB-Verbindung (Ultra Wide Band),
- WiMax (Worldwide Interoperability for Microwave Access),
- Mobilfunkverbindung, insbesondere GSM-, GPRS-, EDGE-, UMTS- und/oder LTE-Verbindungen und
- Infrarotverbindung,
wobei ein mobilfunkbasiertes Kommunikationsmittel besonders bevorzugt einem automatischen Notruf-Modul zugeordnet ist.

14. Verwendung des Systems nach mindestens einem der Ansprüche 12 und 13 zur Fahrzeug-zu-X-Kommunikation in Kraftfahrzeugen.

## Claims

1. A method for the distributed transmission of a communication flow,
- in which the communication flow takes place from a first to a second communication unit (201, 202) at least monodirectionally,
- wherein the first and second communication units (201, 202) are capable of transmitting the communication flow by means of at least two different communication paths (203, 204, 205, 206, 211, 212, 213, 214), and
- wherein the communication flow comprises at least one vehicle-to-X message (301),
- wherein the communication flow is subdivided into at least two partial communication flows by the first communication unit (201) prior to transmission,
- wherein the at least two partial communication flows are transmitted from the first to the second communication unit (201, 202) while being distributed among the at least two different communication paths (203, 204, 205, 206, 211, 212, 213, 214),
- wherein the at least two partial communication flows are reassembled by the second communication unit (202) after reception,
**characterized in**
**that** the second communication unit, when assembling the at least two partial communication flows, checks whether the at least two partial communication flows can be assembled to form a reliable joint communication flow, wherein the second communication unit (202) performs said check by ascertaining whether the at least two partial communication flows correspond to the communication flow previously subdivided by the first communication unit,
- wherein the vehicle-to-X message (301) consists of a payload part (302) and a security data part (303),
- wherein the security data part (303) comprises information on the assessment of the authenticity and reliability of the vehicle-to-X message by the receiver, and the payload part (302) and the security data part (303) are transmitted via respectively different communication paths of the at least two communication paths (203, 204, 205, 206, 211, 212, 213, 214), wherein the joint communication flow is classified as reliable if the security data part (303) is assignable to the payload part (302), and wherein the vehicle-to-X message (301) is classified as unreliable if the security data part (303) is not assignable to the payload part (302).

2. The method of claim 1,
**characterized in that** the first and second communication units (201) are each capable of bidirectional communication, wherein bidirectional communication comprises two monodirectional communication flows taking place in opposite directions, wherein, for bidirectional communication, respectively different communication paths (203, 204, 205, 206, 211, 212, 213, 214) are selected by the first and second communication units (201, 202) for the transmission of the monodirectional communication flow.

3. The method of at least one of claims 1 and 2,
**characterized in that** the security data part (303) comprises a check sum (304) and/or a timestamp (305) and/or a data security certificate (306), in particular a data security certificate (306) based on central infrastructure.

4. The method of at least one of claims 1 to 3,
**characterized in that** an identical partial communication flow is redundantly transmitted via the respectively at least two different communication paths (203, 204, 205, 206, 211, 212, 213, 214).

5. The method of claim 4,
**characterized in that** furthermore the redundantly transmitted partial communication flow is compared, wherein the redundantly transmitted partial communication flow, in particular the redundantly transmitted vehicle-to-X message (301), is classified as unreliable if there is a deviation.

6. The method of at least one of claims 3 to 5,
**characterized in that** furthermore a temporal behavior of the vehicle-to-X message (301) distributedly transmitted via the at least two different communication paths (203, 204, 205, 206, 211, 212, 213, 214) is compared, wherein the vehicle-to-X message (301) is classified as unreliable if there is a deviation in temporal behavior.

7. The method of at least one of claims 1 to 6,
**characterized in that** furthermore position information of a communication unit (201, 202) transmitting the vehicle-to-X message (301) is determined from receiving properties of an electromagnetic wave of the vehicle-to-X message (301) at a receiving device of a communication unit (201, 202) receiving the vehicle-to-X message (301) and compared with position information (308) of the communication unit (201, 202) transmitting the vehicle-to-X message (301), said position information (308) being comprised by the vehicle-to-X message (301), wherein the vehicle-to-X message (301) is classified as unreliable if there is a deviation in the position information.

8. The method of at least one of claims 1 to 7,
**characterized in that**, if the vehicle-to-X message (301) was previously classified as unreliable, a communication-path-dependent reliability assessment is performed in order to assess on which communication path a redundantly transmitted part of the vehicle-to-X message was presumably changed and which redundantly transmitted part is thus presumably unchanged.

9. The method of at least one of claims 1 to 8,
**characterized in that** vehicle-to-X messages (301) classified as unreliable are rejected in an unprocessed state.

10. The method of at least one of claims 1 to 9,
**characterized in that** the at least two partial communication flows are distributed among the at least two different communication paths (203, 204, 205, 206, 211, 212, 213, 214) according to a predetermined scheme.

11. The method of at least one of claims 1 to 10,
**characterized in that** the respectively at least two different communication paths (203, 204, 205, 206, 211, 212, 213, 214) are at least two different communication means (203, 204, 205, 206, 211, 212, 213, 214) and/or different communication channels of the very same communication means (203, 204, 205, 206, 211, 212, 213, 214).

12. A system for the distributed transmission of a communication flow,
comprising at least a first and a second communication unit (201, 202) communicating with each other monodirectionally or bidirectionally,
wherein the first and second communication units (201, 202) each comprise communication means (203, 204, 205, 206, 211, 212, 213, 214) and are capable, by means of said means, of transmitting the communication flow by means of at least two different communication paths (203, 204, 205, 206, 211, 212, 213, 214),
wherein the first communication unit (201) comprises communication flow subdividing means (209) for subdividing a communication flow into at least two partial communication flows;
and wherein the second communication unit (202) comprises communication flow assembling means (216) for assembling the at least two partial communication flows to form a joint communication flow;
**characterized in that** the second communication unit (202) comprises assessing means (215) for assessing a reliability of a vehicle-to-X message (301) comprised by a received partial communication flow and also comparing means (215) for comparing redundantly received partial communication flows,
and wherein the system performs a method of at least one of claims 1 to 11.

13. The system of claim 12,
**characterized in that** a communication means (203, 204, 205, 206, 211, 212, 213, 214) communicates on the basis of at least one of the following connection types:
- WLAN connection, in particular according to IEEE 802.11p,
- ISM (Industrial, Scientific, Medical Band) connection, in particular via a radio-communication-capable locking device,
- Bluetooth connection,
- ZigBee connection,
- UWB (Ultra Wide Band) connection,
- WiMAX (Worldwide Interoperability for Microwave Access),
- mobile communication connection, in particular GSM, GPRS, EDGE, UMTS and/or LTE connections, and
- infrared connection,
wherein a mobile-communication-based communication means is particularly preferably assigned to an automatic emergency call module.

14. A use of the system of at least one of claims 12 and 13 for vehicle-to-X communication in motor vehicles.

## Revendications

1. Procédé pour le transfert réparti d'un flux de communication,
- par lequel le flux de communication s'effectue de façon au moins monodirectionnelle d'une première à une deuxième unité de communication (201, 202),
- la première et la deuxième unités de communication (201, 202) étant à même d'effectuer le transfert du flux de communication au moyen d'au moins deux voies de communication différentes (203, 204, 205, 206, 211, 212, 213, 214), et
- le flux de communication comprenant au moins un message de véhicule à X (301),
- le flux de communication étant divisé par la première unité de communication (201) en au moins deux flux de communication partiels avant une émission,
- les au moins deux flux de communication de la première à la deuxième unités de communication (201, 202) étant transférés de façon répartie sur les au moins deux voies de communication différentes (203, 204, 205, 206, 211, 212, 213, 214),
- les au moins deux flux de communication partiels étant de nouveau réunis par la deuxième unité de communication (202), après une réception,
**caractérisé en ce que**
la deuxième unité de communication vérifie, lors de la réunion des au moins deux flux de communication partiels, si les au moins deux flux de communication partiels peuvent être réunis en un flux de communication commun fiable, la deuxième unité de communication (202) déterminant si les au moins deux flux de communication partiels correspondent au flux de communication divisé auparavant par la première unité de communication,
- le message de véhicule à X (301) se composant d'une partie de données utiles (302) et d'une partie de données de sécurité (303),
- la partie de données de sécurité (303) comprenant des informations relatives à l'évaluation de l'authenticité et de la fiabilité du message de véhicule à X par le récepteur, et la partie de données utiles (302) et la partie de données de sécurité (303) étant transférées par des voies de communication respectivement différentes parmi les au moins deux voies de communication (203, 204, 205, 206, 211, 212, 213, 214), le flux de communication commun étant classé comme fiable lorsque la partie de données de sécurité (303) peut être attribuée à la partie de données utiles (302) et le message de véhicule à X (301) étant classé comme non fiable lorsque la partie de données de sécurité (303) ne peut pas être attribuée à la partie de données utiles (302).

2. Procédé selon la revendication 1,
**caractérisé en ce que** la première et la deuxième unités de communication (201) sont à même d'assurer une communication bidirectionnelle, la communication bidirectionnelle comprenant deux flux de communication monodirectionnels opposés, des voies de communication respectivement différentes (203, 204, 205, 206, 211, 212, 213, 214) étant sélectionnées pour le transfert du flux de communication monodirectionnel, pour la communication bidirectionnelle de la première et de la deuxième unités de communication (201, 202).

3. Procédé selon au moins l'une des revendications 1 et 2,
**caractérisé en ce que** la partie de données de sécurité (303) comprend une somme de contrôle (304) et/ou un horodateur (305) et/ou un certificat de sécurité de données (306), en particulier un certificat de sécurité de données (306) basé sur une infrastructure centrale.

4. Procédé selon au moins l'une des revendications 1 à 3,
**caractérisé en ce qu'**un flux de communication partiel identique est transféré de façon redondante par les respectivement au moins deux voies de communication différentes (203, 204, 205, 206, 211, 212, 213, 214).

5. Procédé selon la revendication 4,
**caractérisé en ce que,** en outre, une comparaison du flux de communication partiel transféré de façon redondante est effectuée, le message de véhicule à X (301) transféré de façon redondante étant en particulier classé comme non fiable en cas d'écart du flux de communication partiel transféré de façon redondante.

6. Procédé selon au moins l'une des revendications 3 à 5,
**caractérisé en ce que**, en outre, une comparaison d'un comportement temporel du message de véhicule à X (301) transféré de façon répartie par les au moins deux voies de communication différentes (203, 204, 205, 206, 211, ,212, 213, 214) est effectuée, le message de véhicule à X (301) étant classé comme non fiable en cas d'écart du comportement temporel.

7. Procédé selon au moins l'une des revendications 1 à 6,
**caractérisé en ce que**, en outre, des informations de position d'une unité de communication (201, 202) envoyant le message de véhicule à X (301) sont déterminées à partir de caractéristiques de réception d'une onde électromagnétique du message de véhicule à X (301) à un dispositif de réception d'une unité de communication (201, 202) recevant le message de véhicule à X (301), et sont comparées avec des informations de position comprises par le message de véhicule à X (301) de l'unité de communication envoyant le message de véhicule à X (301), le message de véhicule à X (301) étant classé comme non fiable lors d'un écart des informations de position.

8. Procédé selon au moins l'une des revendications 1 à 7,
**caractérisé en ce que**, lorsque le message de véhicule à X (301) a été classé auparavant comme non fiable, une évaluation de fiabilité dépendant de la voie de communication est effectuée pour déterminer sur quelle voie de communication une composante du message de véhicule à X transférée de façon redondante a probablement été modifiée et, par conséquent, quelle composante transférée de façon redondante est probablement non modifiée.

9. Procédé selon au moins l'une des revendications 1 à 8,
**caractérisé en ce que** les messages de véhicule à X (301) classés comme non fiables sont rejetés non traités.

10. Procédé selon au moins l'une des revendications 1 à 9,
**caractérisé en ce qu'**une répartition des au moins deux flux de communication sur les au moins deux voies de communication différentes (203, 204, 205, 206, 211, 212, 213, 214) est effectuée d'après un schéma spécifié.

11. Procédé selon au moins l'une des revendications 1 à 10,
**caractérisé en ce que** les au moins deux voies de communication différentes respectives (203, 204, 205, 206, 211, 212, 213, 214) sont au moins deux moyens de communication différents (203, 204, 205, 206, 211, 212, 213, 214) et/ou des canaux de communication différents d'un seul et même moyen de communication (203, 204, 205, 206, 211, 212, 213, 214).

12. Système pour le transfert réparti d'un flux de communication,
comprenant au moins une première et une deuxième unités de communication (201, 202), lesquelles communiquent de façon monodirectionnelle ou bidirectionnelle l'une avec l'autre,
la première et la deuxième unités de communication (201, 202) comprenant respectivement des moyens de communication (203, 204, 205, 206, 211, 212, 213, 214), et, au moyen de ceux-ci, étant à même de réaliser le transfert du flux de communication au moyen d'au moins deux voies de communication différentes (203, 204, 205, 206, 211, 212, 213, 214),
la première unité de communication (201) comprenant des moyens de répartition de flux de communication (209) pour la division d'un flux de communication en au moins deux flux de communication partiels ; et la deuxième unité de communication (202) comprenant des moyens de réunion de flux de communication (216) pour la réunion des au moins deux flux de communication partiels en un flux de communication commun ;
**caractérisé en ce que** la deuxième unité de communication (202) comprend des moyens d'évaluation (215) pour l'évaluation d'une fiabilité d'un message de véhicule à X (301) compris par un flux de communication partiel reçu et, en outre, des moyens de comparaison (215) pour la comparaison de flux de communication partiels reçus redondants,
et le système exécutant un procédé selon au moins l'une des revendications 1 à 11.

13. Système selon la revendication 12,
**caractérisé en ce que** les moyens de communication (203, 204, 205, 206, 211, 212, 213, 214) communiquent sur la base d'au moins un des types de connexion suivants :
- connexion WLAN, en particulier conformément à IEEE 802.11p,
- connexion ISM (bandes industrielle, scientifique/médicale), en particulier par un dispositif de fermeture capable de liaison radio,
- connexion Bluetooth,
- connexion ZigBee,
- connexion ULB (bande ultra-large),
- WiMAX (Worldwide Interoperability for Microwave Access),
- connexion par téléphonie mobile, en particulier connexions GSM, GPRS, EDGE, UMTS et/ou LTE, et
- connexion infrarouge,
un moyen de communication basé sur la téléphonie mobile étant attribué à un module d'appel d'urgence automatique, de façon particulièrement préférée.

14. Utilisation du système selon au moins l'une des revendications 12 et 13 pour la communication de véhicule à X dans des véhicules.
